(19) Europäisches Patentamt / European Patent Office / Office européen des brevets

(11) **EP 4 369 269 A1**

(12) **EUROPEAN PATENT APPLICATION**

(43) Date of publication:
**15.05.2024   Bulletin 2024/20**

(21) Application number: **22206455.2**

(22) Date of filing: **09.11.2022**

(51) International Patent Classification (IPC):
**G06Q 10/30** (2023.01)        **G06Q 50/28** (2012.01)

(52) Cooperative Patent Classification (CPC):
**G06Q 10/08; G06Q 10/30**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Borealis AG**
**1020 Vienna (AT)**

(72) Inventors:
• **MOLENAERS, An**
**3583 Beringen (BE)**

• **VAN BALLAER, Geert**
**3583 Beringen (BE)**
• **VAN DEN EYNDE, Filip**
**1200 Sint-Lambrechts-Woluwe (BE)**
• **FREDERIX, Jeroen**
**2018 Antwerpen (BE)**

(74) Representative: **Maiwald GmbH**
**Elisenhof**
**Elisenstraße 3**
**80335 München (DE)**

(54) **COMPUTER-IMPLEMENTED METHOD FOR DETERMINING A SUSTAINABILITY SCORE OF A REUSE SYSTEM FOR REUSABLE PACKAGES**

(57)   Computer-implemented method for determining a sustainability score of a reuse system for reusable packages, the method comprising: providing a plurality of reusable packages, wherein each reusable package comprises a unique identification element; providing use cycle data comprising the number of use cycles of each reusable package, wherein the number of use cycles of each reusable package is determined by identifying each reusable package by means of its unique identification element at predefined points in the reuse system; determining a sustainability score for the reuse system based on the use cycle data.

Fig. 1

providing a plurality of reusable packages, wherein each reusable package comprises a unique identification element — 100

providing use cycle data — 110

determining a sustainability score — 120

**Description**

**TECHNICAL FIELD**

The present disclosure relates to a computer-implemented method for determining a sustainability score of a reuse system for reusable packages, a system for determining a sustainability score for a reuse system for reusable packages, a use of a reusable package comprising a unique identification element in such a method or system, a use of a computer-based central or decentral database comprising entries on a plurality of unique identification data and a respective computer program element.

**TECHNICAL BACKGROUND**

Reuse solutions for packaging, e.g. polyolefin packaging, and products have been developed widely in the past decades. They were ranging from small scale initiatives, where a washing step after each use was implemented, for example for cutlery, bowls and beverage cups, to large scale pooling systems for transport packaging, as well as deposit/reuse return systems but those mainly for Polyethylene terephthalate (PET) bottles and aluminum cans. Also well-known are refill stations in retail shops, where consumers bring their own reusable container.

When comparing reuse and single use systems, the unknown efficiency and performance of the reuse system and the end-of-life solution of the reusable package and products is problematic as it is often not obvious which system has a lower environmental impact. Ideally, a reuse solution must prove its sustainability efficiency in comparison to a conventional single-use system by performing a Life Cycle Assessment (LCA). A LCA is a systematic analysis of the potential environmental impacts and energy balance of products throughout their total life cycle. However, LCA is costly, time consuming and can only be performed by skilled professionals. Moreover, the calculation can only be performed once the reuse operation has been terminated and all data is collected. Hence several weeks can pass before a calculation can be performed. In addition, LCA results are often not comparable due to the lack of standardization of the scoring system.

It has been found that a further need exists to provide objective means to assess the sustainability of a reuse system for reusable packages.

**SUMMARY OF THE INVENTION**

An aspect of the present disclosure relates to a computer-implemented method for determining a sustainability score of a reuse system for reusable packages, the method comprising:

providing a plurality of reusable packages, wherein each reusable package comprises a unique identification element;
providing use cycle data comprising the number of use cycles of each reusable package, wherein the number of use cycles of each reusable package is determined by identifying each reusable package by means of its unique identification element at predefined points in the reuse system;
determining a sustainability score for the reuse system based on the use cycle data.

A further aspect of the present disclosure relates to a system for determining a sustainability score for a reuse system for reusable packages, the method comprising:

a plurality of reusable packages, wherein each reusable package comprises a unique identification element;
a providing unit configures to provide use cycle data comprising the number of use cycles of each reusable package, wherein the number of use cycles of each reusable package is determined by identifying each reusable package by means of its unique identification element at predefined points in the reuse system;
a determination unit configured to determine a sustainability score for the reuse system based on the use cycle data.

A further aspect of the present disclosure relates to a use of a reusable package comprising a unique identification element in a computer-implemented method for determining a sustainability score of a reuse system for reusable packages and/or in a system for determining a sustainability score for a reuse system for reusable packages.

A further aspect of the present disclosure relates to a use of a computer-based central or decentral database comprising entries on a plurality of unique identification data each identifying a specific reusable package in a computer-implemented method for determining a sustainability score of a reuse system for reusable packages and/or in a system for determining a sustainability score for a reuse system for reusable packages.

A further aspect of the present disclosure relates to a computer program element with instructions, which, when executed on computing devices of a computing environment, is configured to carry out the steps of the in a computer-implemented method for determining a sustainability score of a reuse system for reusable packages in a system for determining a sustainability score for a reuse system for reusable packages.

The embodiments described herein relate to the method, the system and the computer program element lined out above and vice versa. Advantageously, the benefits provided by any of the embodiments and examples equally apply to all other embodiments and examples and vice versa.

It is an object of the present disclosure to provide objective means to assess the sustainability of a reuse system for reusable packages. The method, device, system, application device, apparatus, computer program element, disclosed herein provide objective means to assess the sustainability of a reuse system for reusable packages. The digital solution which have been tested and developed may provide traceability and may allow reuse operators to measure in an effective way the sustainability score of reuse solutions/reuse systems. They may allow optimization of the lifetime of products, and effective high quality recycling at the end of life. One of the benefits may be a clear traceability of reusable package during their reuse life time, the demonstration of sustainability and economics of reuse systems and may provide an objective methodology to qualify the end-of-life options of a reuse system.

These and other objects, which become apparent upon reading the following description, are solved by the subject matters of the independent claims. The dependent claims refer to preferred embodiments of the invention.

The term "sustainability score" is to be understood broadly in the present case and comprises a figure or value configured to present information about the sustainability of a reuse system for reusable packages, e.g. a reusable plastic package/compound, wherein the sustainability is preferably dependent from the number of reuses of the reusable packages. The sustainability score may comprise a metric, e.g. a verbal coding "bad", "good", "very good" or a color coding "red", "orange", "green" or a number coding "1","2","3". The sustainability score is not limited to the mentioned examples. The sustainability score may be based on data submitted by a master batcher and converter for an OEM, a Retailer, or End customer. The sustainability score may be used to determine an emission footprint, such as $CO_2$ footprint, or fluid usage, such as water usage, of the reusable packaging system/reuse system for reusable packages. The sustainability score is the outcome of a calculation method that allows for an evaluation of the performance from sustainability perspective of a reuse system for reusable packages, i.e. a reuse system, versus a single-use system. The sustainability score may provide an efficiency scoring of a reuse system compared to its virtual single use alternative. It may be expressed as a percentage of the actual number of uses of a reusable packaging or product in a reuse system/reuse system divided by the break-even point of the reuse versus single-use. This break-even point may determine the minimum number of uses necessary for reusable packages or products to be performing equal than single-use items from sustainability perspective. Every use above this break-even point may come in favor of the reuse/reuse system.

The sustainability score may define material efficiency, but it may also demonstrate or form the basis to compare $CO_2$ footprint, non-renewable energy and water efficiency and eventually be considered as LCA. This will then be reflected in the break-even point. Such sustainability score may be provided by the following formula:

$$Sustainability\ score = [(\frac{Actual\ number\ of\ uses\ of\ an\ item\ in\ a\ reuse\ system}{Break-eve\ \ point\ of\ reuse\ versus\ single-use}) - 1]\%$$

Using such data driven sustainability score may have the following advantages:

- live calculations may be performed, since such sustainability score may be calculated as soon as the reuse operations are functional, thus can be based on actual live performance data;
- the calculation may be performed "on the fly", i.e. at any given point in time, the sustainability score can be calculated;
- due to the immediate nature of the calculation, such sustainability score may allow to identify and implement quickly and in a transparent way tactics and actions to improve the efficiency of the reuse system;
- such a sustainability score may provide a standard in the industry so different reuse systems/reuse systems for reusable packages may be compared and ranked in terms of efficiency; and
- such a sustainability score may facilitate the interpretation of the performance results of reuse systems/reuse systems for reusable packages and comparison versus a single-use system.

The sustainability scores may allow to optimize the decision making process in several ways. For example, in case the sustainability score is slightly negative (meaning that the reuse system is performing slightly less efficient versus a single use system), it can be investigated what the main driver is for this lower score. By collecting the data throughout the reuse system via a computer-implemented method according to the present disclosure and executing relevant analysis, the root causes may be investigated. For example:

- if it is linked to a high number of damaged products (and therefore lost products) due to bad reuse behavior, focus should be on incentivizing the correct reuse behavior by e.g. clear instructions, training etc. via the tracking of the products at predefined points, it should be possible to easily trace back and target the main source of damages;

- if it is linked to a high number of lost products due to inefficient cleaning process, the cleaning process should be optimized (e.g. changing parameters like water temperature, detergent, presorting step, water usage...) or in case it is mainly linked to the design of the product (difficult to clean because of hidden corners), it can be investigated to redesign the product and make it more fit for reuse;
- if it is linked to a high number of products in transit (products blocked for use due to complex logistic process), the logistic flow should be optimized. This can be linked to the number or location of collection points, frequency of collection of used products, pooling/transportation from collection point and washing facility, etc;
- if it is linked to the increased weight of the reusable product, it can be investigated if re-designing the product can improve the sustainability score (for example by lowering the weight of the reusable product - e.g. foaming the product).

The sustainability score may be calculated based on several parameters of data that are collected through multiple data measurement points/predefined points in the reuse system but also based on intrinsic material characteristics. The data measuring points may be made possible by tagging of the reusable package and reading the various states and changes that the reusable package undergo when they are brought into circulation in a reuse system. By tagging each individual reusable package or product by a UID (Unique IDentifier) and installing readers and writers at specific points/ predefined points in a reuse system, real life usage data may be collected. These UID's or identifiers may be linked to, for example the type of reusable package/product (e.g. cup/food bowl/...), production date, batch, product specification, weight, expected lifetime, theoretical reuse cycles, food vs non-food, ID of a reuse operator and converter, etc.

The term "predefined points" in the reuse system is to be understood broadly in the present case and comprise at least one data measurement point in the reuse system. At these predefined points respective readers and writers, in case of writeable UID's like RFID, may be installed at the facilities of the reuse operators like warehouse, cleaning and washing facilities, but can be installed at venues where the reuse operator offers the reuse services. Venues may include but are not limited to public or private events, bars, restaurants, coffee shops, concert halls, company restaurants, storage, transport and or packaging facilities, etc. where data is collected with each transaction. A transaction can be, but is not limited to, the purchase or start of usage of the reusable package or product in some form like the purchase of a reusable food bowl, the packing of a product, the shipment of the reusable package or product etc. The return of the reusable package or product after use and collection to the reuse operator's collection points also may mark a possible transaction point, as well as the moment the reusable package or product is washed, collected for storage or redistributed in the point of sale. Data which is collected at each transaction can be, but is not limited to, the time of transaction, which (anonymous) user is picking up the item, the time the transaction takes place, how long the item was is use. Tracking may be done minimum once per reuse loop, preferably after cleaning and quality inspection of the reusable package. Hereby the number of use cycles per product may be monitored.

The term "computer-based database" is to be understood broadly in the present case and comprises any database or data system, which is configured to store and manage data. The database may be central or decentral organized and may comprise different access authorizations to different users (e.g. read, read/write etc.). The database may be stored and executed on a cloud server. The database may be realized as a block chain network. The block chain may increase a protection against fake data and therefor increase the trust of customers. The block chain may increase analysis capabilities (e.g. determining loop number of recycled plastic compound).

The term "unique identification element" is to be understood broadly in the present case and comprises any means allowing a unique identification of a reusable package. The unique identification element may be, for example, but not exclusive, a QR code, a hologram, a microchip, a NFC-chip and/or a RFID-chip.

The term "use cycle data" is to be understood broadly in the present case and comprises any data comprising the number of use cycles of each reusable package. The use cycle data may also comprise or allocated to wear and tear data, mechanical and chemical property data of the reusable package. In an example, the use cycle data comprise the number of use cycles of each reusable package, the number of losses of reusable packages, the number of damaged reusable packages, average hours in use, return rates, average age of the reusable packages.

The term "emission footprint" is to be understood broadly in the present case and comprises any data related to environmental footprint, wherein the environmental footprint may refer to an entity and its associated environmental footprint. The environmental footprint may be entity specific. For example, the environmental footprint may relate to a reusable package, a company, a process such as a manufacturing process, a raw material or basic substance, a product or material, a component, a component assembly, an end product, combinations thereof or additional entity-specific relations. Emission footprint may include data relating to carbon footprint of a reusable package. Emission data may include data relating to greenhouse gas emissions, e.g. released in production of the chemical product. Emission data may include data related to greenhouse gas emissions. Greenhouse gas emissions may include emissions such as carbon dioxide ($CO_2$) emission, methane ($CH_4$) emission, nitrous oxide ($N_2O$) emission, hydrofluorocarbons (HFCs)

emission, perfluorocarbons (PFCs) emission, sulphurhexafluoride (SF6) emission, nitrogen trifluoride (NF3) emission, combinations thereof and additional emissions.

The term "block chain" is to be understood broadly in the present case. By means of such a block chain, the identification data and the above mentioned data may be stored in such a block chain in order to provide transparent, authentic and verifiable information to all the partners in the value/product chain.

The term "providing" as used herein is to be understood broadly in the present case and represents any providing, receiving, querying, measuring, calculating, determining, transmitting of data, but is not limited thereto. Data may be provided by a user via a user interface, depicted/shown to a user by a display, and/or received from other devices, queried from other devices, measured other devices, calculated by other device, determined by other devices and/or transmitted by other devices.

The term "data" as used herein is to be understood broadly in the present case and represents any kind of data. Data may be single numbers/numerical values, a plurality of a numbers/numerical values, a plurality of a numbers/numerical values being arranged within a list, 2 dimensional maps or 3 dimensional maps, but are not limited thereto.

As used herein "determining" also includes "estimating, calculating, initiating or causing to determine", "generating" also includes "initiating or causing to generate", and "providing" also includes "initiating or causing to determine, generate, select, send, query or receive".

In an embodiment of the method for determining a sustainability score of a reuse system for reusable packages, the method is further comprising:

determining based on the sustainability score an emission footprint, in particular a $CO_2$ footprint, of the reuse system.

In an embodiment of the method for determining a sustainability score of a reuse system for reusable packages, the method is further comprising:

determining based on the sustainability score a fluid usage, in particular a water usage, of the reuse system.

In an embodiment of the method for determining a sustainability score of a reuse system for reusable packages, the method is further comprising:

providing the determined data and/or the classification data by a unique identifier, in particular by a QR code, hologram, microchip, NFC-chip, RFID -chip.

In an embodiment of the method for determining a sustainability score of a reuse system for reusable packages, the unique identification element is provided by means of a QR code, a hologram, a microchip, a NFC-chip and/or a RFID -chip.

In an embodiment of the method for determining a sustainability score of a reuse system for reusable packages, the reusable package is a plastic package, plastic food tray, a plastic bottle and/or a plastic cup.

In an embodiment of the method for determining a sustainability score of a reuse system for reusable packages, the reusable package comprises one or more selected from the group comprising: low density polyethylene (LDPE), linear LDPE (LLDPE), high density polyethylene (HDPE), polyoxmethylene (POM) polypropylene (PP), polyamide (PA), poly ethylene terephthalate (PET), poly butylene terephthalate (PBT), acrylnitril-butadiene-styrene (ABS), polymethylmethacrylate (PMMA), thermoplastic polyurethane (TPU), polystyrene (PS), polylactic acid (PLA), polyvinylchloride (PVC) or polycarbonate (PC).

In an embodiment of the method for determining a sustainability score of a reuse system for reusable packages, the method is further comprising:

receiving a block chain storing unique identification data for each reusable package associated with the number of use cycles of each reusable package; uploading into the block chain the number of use cycles of each reusable package identifying at the predefined points in the reuse system.

In an embodiment of the method for determining a sustainability score of a reuse system for reusable packages, the step of determining the sustainability score comprises:

identifying in the block chain the data entries associated with the unique identification data for the reusable packages and the number of use cycles of the reusable packages;
determining the sustainability score of the reuse system based on the data entries and the number of use cycles of the reusable packages.

## BRIEF DESCRIPTION OF THE DRAWINGS

In the following, the present disclosure is further described with reference to the enclosed figures:

**Figure 1** illustrates a flow diagram of a computer-implemented method for determining a sustainability score for a reuse system for reusable packages;

**Figure 2**  illustrates a system for determining a sustainability score for a reuse system for reusable packages; and

**Figure 3**  illustrates the sustainability score of an example reuse system.

## DETAILED DESCRIPTION OF EMBODIMENT

The following embodiments are mere examples for implementing the method, the system, the apparatus, or application device disclosed herein and shall not be considered limiting.

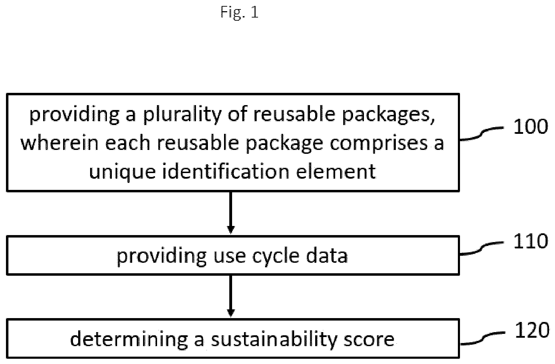

**Figure 1** illustrates a flow diagram of a computer-implemented method for determining a sustainability score for a reuse system for reusable packages. In a first step 100, a plurality of reusable packages is provided, wherein each reusable package comprises a unique identification element. In a second step 110, use cycle data comprising the number of use cycles of each reusable package are provided, wherein the number of use cycles of each reusable package is determined by identifying each reusable package by means of its unique identification element at predefined points in the reuse system. In a third step 120, a sustainability score for the reuse system based on the use cycle data is determined.

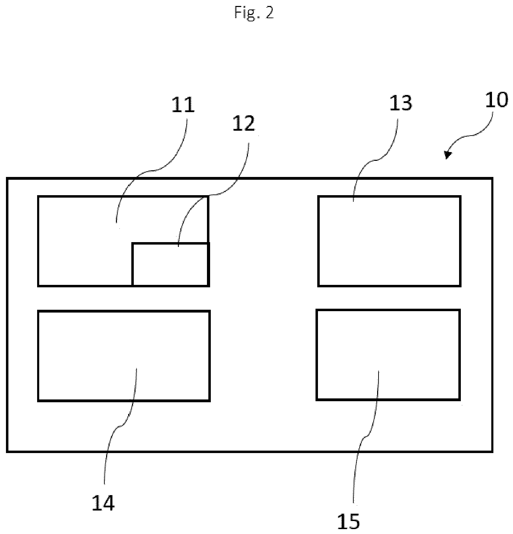

**Figure 2** illustrate a reuse system 10 for determining a sustainability score for a reuse system for reusable packages. The system 10 comprises a plurality of reusable packages 11, wherein each reusable package 11 comprises a unique identification element 12. The system 10 is further comprising a providing unit 13 configured to provide use cycle data comprising the number of use cycles of each reusable package 11, wherein the number of use cycles of each reusable package 11 is determined by identifying each reusable package 11 by means of its unique identification element 12 at predefined points 14 in the reuse system 11. The reuse system 10 is further comprising a determination unit 15 configured to determine a sustainability score for the reuse system 10 based on the use cycle data.

In the following, an example reuse system is evaluated and compared to a single use system. In this example, the reusable package is a coffee cup. In this example, the sustainability score is determined on raw material efficiency according to the following exemplary formula:

$$Sustainability\ score = [(\frac{Actual\ number\ of\ uses\ of\ an\ item\ in\ a\ reuse\ system}{Break-even\ point\ of\ reuse\ versus\ single-us}) - 1]\%$$

In order to determine the break-even point of a reuse system versus a single-use system, a calculation is made based on the total weight of a single-use item, the number of items in the single-use system versus the weight of a reusable item and the number of items in the reuse system that are brought into circulation in the reuse system. The break-even point according to the present disclosure is that number of uses per item at which the reuse system has required as much material for the reusable products, e.g., reusable coffee cups, as a single use system for a specific number of servings.

The single-use system consumes 10,000 servings during a period of time and every serving implies a consumption of one disposable single-use item. The weight of a single-use item is 12 g and the item is a coffee cup made of polypropylene (PP). Hence, for a specific period of time when 10,000 serving is completed, the single-use system consumes an amount of 120 kg polypropylene (cf. following table).

**Single-use system**

**Table 1**

| weight (kg)/item | number of servings | number of items | number of uses per item | Total weight (kg) |
|---|---|---|---|---|
| 0.012 | 10,000 | 10,000 | 1 | 120 |
| 0.012 | 10,000 | 10,000 | 1 | 120 |
| 0.012 | 10,000 | 10,000 | 1 | 120 |
| 0.012 | 10,000 | 10,000 | 1 | 120 |
| 0.012 | 10,000 | 10,000 | 1 | 120 |
| 0.012 | 10,000 | 10,000 | 1 | 120 |
| 0.012 | 10,000 | 10,000 | 1 | 120 |
| 0.012 | 10,000 | 10,000 | 1 | 120 |
| 0.012 | 10,000 | 10,000 | 1 | 120 |
| 0.012 | 10,000 | 10,000 | 1 | 120 |

(continued)

| weight (kg)/item | number of servings | number of items | number of uses per item | Total weight (kg) |
|---|---|---|---|---|
| 0.012 | 10,000 | 10,000 | 1 | 120 |
| 0.012 | 10,000 | 10,000 | 1 | 120 |
| 0.012 | 10,000 | 10,000 | 1 | 120 |
| 0.012 | 10,000 | 10,000 | 1 | 120 |
| 0.012 | 10,000 | 10,000 | 1 | 120 |
| 0.012 | 10,000 | 10,000 | 1 | 120 |
| 0.012 | 10,000 | 10,000 | 1 | 120 |

The reuse system brings 3,000 reusable products in circulation to serve as well these 10,000 servings. The reusable coffee cups made of polypropylene (PP) weigh 25 g each resulting in a total of 75 kg polypropylene brought in the reuse system (cf. following table).

Reuse system

| weight (kg)/item | number of servings | number of items | number of uses per item | Total weight (kg) |
|---|---|---|---|---|
| 0.025 | 10,000 | 10,000 | 1.00 | 250 |
| 0.025 | 10,000 | 9,400 | 1.06 | 235 |
| 0.025 | 10,000 | 8,800 | 1.14 | 220 |
| 0.025 | 10,000 | 8,200 | 1.22 | 205 |
| 0.025 | 10,000 | 7,600 | 1.32 | 190 |
| 0.025 | 10,000 | 7,000 | 1.43 | 175 |
| 0.025 | 10,000 | 6,400 | 1.56 | 160 |
| 0.025 | 10,000 | 5,800 | 1.72 | 145 |
| 0.025 | 10,000 | 5,200 | 1.92 | 130 |
| 0.025 | 10,000 | 4,800 | 2.08 | 120 |
| 0.025 | 10,000 | 4,200 | 2.38 | 105 |
| 0.025 | 10,000 | 3,600 | 2.78 | 90 |
| 0.025 | 10,000 | 3,000 | 3.33 | 75 |
| 0.025 | 10,000 | 2,400 | 4.17 | 60 |
| 0.025 | 10,000 | 1,600 | 6.25 | 40 |
| 0.025 | 10,000 | 1,000 | 10.00 | 25 |
| 0.025 | 10,000 | 400 | 25.00 | 10 |

| 2.08 | Break-even point for 10.000 servings |
|---|---|

| 3.33 | Actual number of reuse items and reuses per item |
|---|---|

## Table 2

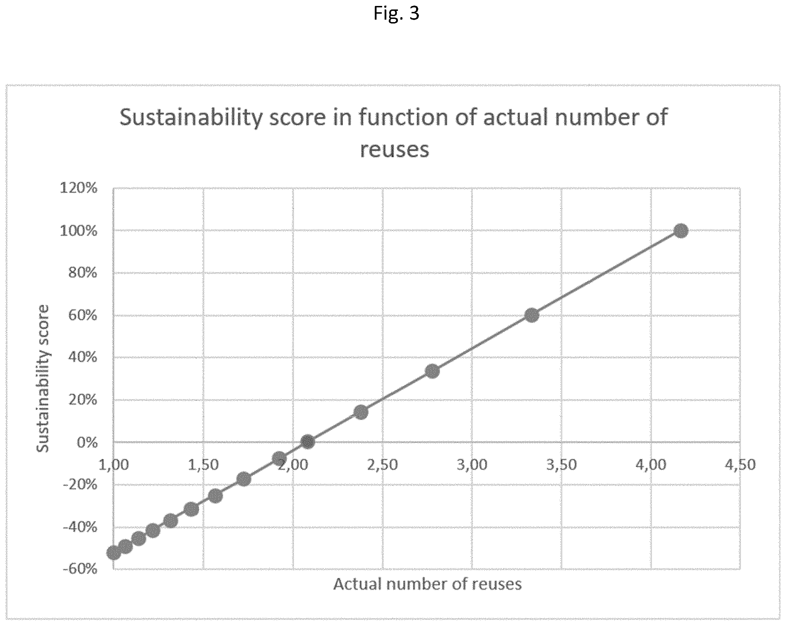

Figure 3 shows the values from Tables 1 and 2 graphically.

As can be taken from Tables 1 and 2 and Figure 3, in this example, the break-even point of the reuse system versus the single-use system can be calculated. For the determination of the break-even point, total weight of the polymer in the single-use system that is 120 kg is divided by the weight of the coffee cup from the reuse system (reuse item) which is 25 g. As a result, it is determined that the same amount of raw material in the reuse system would mean 4,800 reuse items, allowing the break-even point for the reuse system to be determined as 2.08. This means that the reusable products need to be reused minimum 2.08 times in the reuse system in order to be as efficient from raw material efficiency perspective than the disposable single-use system. Failing to reach 2.08 uses, the reuse system is not as efficient as a single-use.

The reusable package/products are foreseen with a RFID chips in order to measure the actual number of uses within the scope of this experiment. At the cleaning facility, a reader is installed at the beginning of the washing line. Here the RFID chip of a product passing by the washing line is read. In the timeframe of the experiment, the data was collected at the washing line. The results show that on average reusable products were used 3.33 times.

The sustainability score is calculated by dividing the actual number of uses of a reusable product by the break-even point. The score is 60%. Thus, the reuse system is performing 60% better than a comparable single use system. In Table 3 below, the efficiency evolution can be read in function of the actual number of uses of the reuse system.

**Sustainability score**

Table 3

| Break-even point | Actual number of reuse | Score |
| --- | --- | --- |
| 2.08 | 1.00 | -52% |
| 2.08 | 1.06 | -49% |
| 2.08 | 1.14 | -45% |
| 2.08 | 1.22 | -41% |
| 2.08 | 1.32 | -37% |
| 2.08 | 1.43 | -31% |
| 2.08 | 1.56 | -25% |
| 2.08 | 1.72 | -17% |
| 2.08 | 1.92 | -8% |
| I 2.08 | 2.08 | 0% |
| 2.08 | 2.38 | 14% |
| 2.08 | 2.78 | 34% |
| 2.08 | 3.33 | 60% |
| 2.08 | 4.17 | 100% |
| 2.08 | 6.25 | 200% |

The present disclosure has been described in conjunction with a preferred embodiment as examples as well. However, other variations can be understood and effected by those persons skilled in the art and practicing the claimed invention, from the studies of the drawings, this disclosure and the claims. Notably, in particular, the any steps presented can be performed in any order, i.e. the present invention is not limited to a specific order of these steps. Moreover, it is also not required that the different steps are performed at a certain place or at one node of a distributed system, i.e. each of the steps may be performed at a different nodes using different equipment/data processing units.

In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

**Claims**

1. Computer-implemented method for determining a sustainability score of a reuse system for reusable packages, the method comprising:

    providing a plurality of reusable packages, wherein each reusable package comprises a unique identification element;
    providing use cycle data comprising the number of use cycles of each reusable package, wherein the number of use cycles of each reusable package is determined by identifying each reusable package by means of its unique identification element at predefined points in the reuse system;
determining a sustainability score for the reuse system based on the use cycle data.

2. Computer-implemented method according to claim 1, further comprising:
determining based on the sustainability score an emission footprint, in particular a $CO_2$ footprint, of the reuse system.

3. Computer-implemented method according to claim 1 or claim 2, further comprising:
determining based on the sustainability score a fluid usage, in particular a water usage, of the reuse system.

4. Computer-implemented method according to any one of the preceding claims, wherein the unique identification element is provided by means of a QR code, a hologram, a microchip, a NFC-chip and/or a RFID -chip.

5. Computer-implemented method according to any one of the preceding claims, wherein the reusable package is a plastic package, plastic food tray, a plastic bottle and/or a plastic cup.

6. Computer-implemented method according to any one of the preceding claims, wherein the sustainability score is sustainability score is provided by the formula:

$$Sustainability\ score = [(\frac{Actual\ number\ of\ uses\ of\ an\ item\ in\ a\ reuse\ system}{Break-even\ point\ of\ reuse\ versus\ single-use}) - 1]\%.$$

7. Computer-implemented method according to any one of the preceding claims, wherein the reusable package comprises one or more selected from the group comprising: low density polyethylene (LDPE), linear LDPE (LLDPE), high density polyethylene (HDPE), polyoxmethylene (POM) polypropylene (PP), polyamide (PA), poly ethylene terephthalate (PET), poly butylene terephthalate (PBT), acrylnitril-butadiene-styrene (ABS), polymethylmethacrylate (PMMA), thermoplastic polyurethane (TPU), polystyrene (PS), polylactic acid (PLA), polyvinylchloride (PVC) or polycarbonate (PC).

8. Computer-implemented method according to any one of the preceding claims, further comprising:

receiving a block chain storing unique identification data for each reusable package associated with the number of use cycles of each reusable package;
uploading into the block chain the number of use cycles of each reusable package identifying at the predefined points in the reuse system.

9. Computer-implemented method according to any one of the preceding claims, wherein the step of determining the sustainability score comprises:

identifying in the block chain the data entries associated with the unique identification data for the reusable packages and the number of use cycles of the reusable packages;
determining the sustainability score of the reuse system based on the data entries and the number of use cycles of the reusable packages.

10. Computer-implemented method according to any one of the preceding claims, further comprising:

providing at least one predetermined sustainability score;
determining whether the determined sustainability score is below the predetermined sustainability score and, in case the determined sustainability score is below the predetermined sustainability score, providing alarm data and/or an alarm message.

11. System for determining a sustainability score for a reuse system for reusable packages, the method comprising:

a plurality of reusable packages, wherein each reusable package comprises a unique identification element;
a providing unit configured to provide use cycle data comprising the number of use cycles of each reusable package, wherein the number of use cycles of each reusable package is determined by identifying each reusable package by means of its unique identification element at predefined points in the reuse system;

a determination unit configured to determine a sustainability score for the reuse system based on the use cycle data.

12. Use of a reusable package comprising a unique identification element in a method according to any one of the claims 1 to 10.

13. Use of a computer-based central or decentral database comprising entries on a plurality of unique identification data each identifying a specific reusable package in a method according to any one of the claims 1 to 10.

14. Computer program element with instructions, which, when executed on computing devices of a computing environment, is configured to carry out the steps of the method according to any one of the claims 1 to 10 in a system according to claim 11.

Fig. 1

```
┌─────────────────────────────────────────┐
│   providing a plurality of reusable      │
│  packages, wherein each reusable         │ ─── 100
│  package comprises a unique              │
│  identification element                  │
└─────────────────────────────────────────┘
                    │
                    ▼
┌─────────────────────────────────────────┐
│        providing use cycle data          │ ─── 110
└─────────────────────────────────────────┘
                    │
                    ▼
┌─────────────────────────────────────────┐
│     determining a sustainability score   │ ─── 120
└─────────────────────────────────────────┘
```

Fig. 2

Fig. 3

Europäisches Patentamt
European Patent Office
Office européen des brevets

# EUROPEAN SEARCH REPORT

Application Number

EP 22 20 6455

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/106599 A1 (BASF SE [DE]) 27 May 2022 (2022-05-27) * page 2, line 4 – page 6, line 26 * * page 10, line 3 – page 13, line 23 * ----- | 1-14 | INV. G06Q10/30 G06Q50/28 |
| X | WO 2022/106625 A1 (BASF SE [DE]) 27 May 2022 (2022-05-27) * page 2, line 5 – page 6, line 29 * * page 9, line 19 – page 10, line 15 * ----- | 1,4-8, 11-14 | |
| A | US 2019/295045 A1 (STÖCKER CARSTEN [DE] ET AL) 26 September 2019 (2019-09-26) * abstract; figures 3, 4 * * paragraphs [0013] – [0018] * * paragraphs [0025] – [0034] * * paragraphs [0039], [0043], [0045] – [0047] * * paragraphs [0060] – [0067] * * paragraphs [0097] – [0137] * ----- | 1-14 | |
| A | US 2010/274629 A1 (WALKER MARCIA ELAINE [US] ET AL) 28 October 2010 (2010-10-28) * paragraphs [0027] – [0052] * * abstract; figures 2-7 * ----- | 1-14 | TECHNICAL FIELDS SEARCHED (IPC) G06Q |

The present search report has been drawn up for all claims

| Place of search | Date of completion of the search | Examiner |
|---|---|---|
| Munich | 21 April 2023 | Mülthaler, Evelyn |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 6455

21-04-2023

| Patent document cited in search report | | Publication date | Patent family member(s) | | Publication date |
|---|---|---|---|---|---|
| WO 2022106599 | A1 | 27-05-2022 | TW | 202236182 A | 16-09-2022 |
| | | | WO | 2022106599 A1 | 27-05-2022 |
| WO 2022106625 | A1 | 27-05-2022 | TW | 202239565 A | 16-10-2022 |
| | | | WO | 2022106625 A1 | 27-05-2022 |
| US 2019295045 | A1 | 26-09-2019 | EP | 3549075 A1 | 09-10-2019 |
| | | | US | 2019295045 A1 | 26-09-2019 |
| | | | WO | 2018099549 A1 | 07-06-2018 |
| US 2010274629 | A1 | 28-10-2010 | CN | 101872189 A | 27-10-2010 |
| | | | EP | 2244218 A1 | 27-10-2010 |
| | | | US | 2010274629 A1 | 28-10-2010 |

EPO FORM P0459